# EUROPEAN PATENT APPLICATION

(11) **EP 2 361 587 A1**
(43) Date of publication of application: **31.08.2011**
(21) Application number: 10002000.7
(22) Date of filing: 26.02.2010
(51) Int. Cl.: A61C 8/00

(54) **Attachment member and a dental restoration**

(71) Applicant: Nobel Biocare Services AG, 8058 Zürich-Flughafen (CH)
(72) Inventor: Lindström, Håkan, 421 59 Västra Frölunda (SE); Eriksson, Thomas, 411 60 Göteborg (SE)
(74) Representative: Davies, Dominic Jack

(57) **Abstract**

A combination of a dental restoration and a plurality of attachment members is disclosed. The dental restoration comprises a plurality of support members, each support member being configured to be releasably attached to an attachment member. Each attachment member comprises a first support surface facing in the coronal direction of the attachment member for supporting a corresponding support member of the dental restoration, and a second support surface facing in the apical direction of the attachment member and towards the longitudinal axis of the support member and being configured for engagement with a support surface of a dental fixture. Furthermore, each attachment member comprises an attachment portion at an coronal portion thereof for receiving a fastening member for releasably attaching one of the support members. The first support surface has an angle relative the longitudinal axis of the attachment member measured from its apical towards its coronal end that is larger than a corresponding angle of the second support surface.

## Description

### Field of the Invention

This invention pertains in general to the field of dental prosthetics. More particularly, the invention relates to a dental restoration and an attachment member for attaching the dental restoration to a dental fixture.

### Background of the Invention

A dental restoration for restoring multiple teeth, such as a dental bridge, may be supported by a plurality of dental fixtures, which are also referred to as dental implants, and be screw retained. Such dental restorations may be seated directly on a coronal end surface of the dental fixture. For that purpose, the restoration comprises a support member having an annular end surface which rests on top of the coronal end surface of the dental fixture. The support member of the restoration also comprises a through hole for receiving a screw to removeably attach the restoration to the dental fixture. In order to fabricate the restoration, after installation of the dental fixtures an impression is normally first made to record the spatial position of the dental fixtures in the oral cavity of the patient. The impression is used to cast a dental model including implant replicas, which in turn is used to plan the prosthesis. The restoration may be planned using conventional wax-up technique or a CAD/CAM technique, as is commonly know in the art. Using conventional technique, the wax-up provides the basis for casting the restoration. During the casting, the support member to be aligned with the installed fixtures can be provided as pre-manufactured cast abutments, around which wax is built up layer by layer to form the shape of the prosthesis. This structure can be invested in gypsum, the wax burnt out to form a mold, which is used to cast the prosthesis. The cast abutments and the cast material will form a single unitary piece. All these manual steps introduce inaccuracies, wherein the prosthesis, i.e. the support members thereof, may not fit perfectly to the positions of the dental fixtures of the patient. CAD/CAM production of the prosthesis has similar issues with regard to accuracy, introduced by scanning steps, milling steps, sintering steps, etc. For CAD/CAM solutions, a support member corresponding structurally with the cast abutment is normally provided, such as by milling, as an integral part of the restoration.

The inaccuracies may have the consequence that the support members and its support surfaces to alignment with the support surfaces of the dental fixtures may not align as intended. If they do not align, it may not be possible to attach the prosthesis to the dental fixtures or the screws may cause strain to the dental implants, which in the worst case may be lost.

These problems are particularly prominent for implants with a top surface to support the support member of the restoration which has a non-perpendicular angulation relative the longitudinal axis of the dental fixture. For such implants, a misfit between the support member of the restoration and the support surface of the dental implant in the xy-plane will cause a misfit along the z-axis. Said differently, for such implants wherein the support surface is tapering relative the longitudinal axis of the implant, and the support surface of the support member has a corresponding angulation, the support member cannot be fully seated over the support surface of the dental fixture if there is a misfit in the xy-plane. Hence, the prosthesis will not fit appropriately. For implants having a support surface being perpendicular with its longitudinal axis, an inaccuracy along the x-axis will not cause any deviation along the y-axis. EP1925268 discloses a cast abutment to be used for casting a prosthesis, as discussed above. Since it is a cast abutment, it will be integrated with the cast prosthesis and be associated with the issues discussed above. The cast abutment as disclosed herein has an apical portion which includes anti-rotational features for engagement with corresponding anti-rotational features of the dental fixture. This poses even stricter requirements on accuracy, since the anti-rotational features for several support member has to be rotationally aligned with corresponding dental fixtures.

Hence, an improved attachment member would be advantageous and in particular allowing for relaxed requirements of precision, increased flexibility, cost-effectiveness, and/or patient safety would be advantageous.

### Summary of the Invention

Accordingly, embodiments of the present invention preferably seek to mitigate, alleviate or eliminate one or more deficiencies, disadvantages or issues in the art, such as the above-identified, singly or in any combination by providing a combination of a dental restoration and a plurality of attachment members according to the appended patent claims.

According to a first aspect of the invention, a combination comprises a dental restoration and a plurality of attachment members. The dental restoration comprises a plurality of support members, each support member being configured to be releasably attached to an attachment member. Each attachment member comprises a first support surface facing in the coronal direction of the attachment member for supporting a corresponding support member of the dental restoration, a second support surface facing in the apical direction of the attachment member and towards the longitudinal axis of the support member and being configured for engagement with a support surface of a dental fixture, and an attachment portion at an coronal portion thereof for receiving a fastening member for releasably attaching one of the support members The first support surface has an angle relative the longitudinal axis of the attachment member measured from its apical towards its coronal end that is larger than a corresponding angle of the second support surface.

The first support surface may be substantially perpendicular relative to the longitudinal axis of the attachment member The second support surface may be non-perpendicular relative to the longitudinal axis of the attachment member.

The axial distance, measured in the direction of the longitudinal axis of the attachment member, between the first support surface and a coronal end of the second support surface may be in the range of 0.05-0.35mm, preferably in the range of 0.15-0.25mm.

The axial distance, measured in the direction of the longitudinal axis of the attachment member, between the first support surface and an apical end of the second support surface may be in the range of 0.65-0.95mm, preferably in the range of 0.75-1.30mm.

The attachment member may comprise a substantially rotationally symmetrical portion at an apical end thereof, which may be configured to be received in an internal cavity of the dental fixture.

An apical end of the substantially rotationally symmetrical portion may have a diameter which is less than a diameter of a apical end of the second support surface. The coronal end of the substantially rotationally symmetrical portion may be located further towards the coronal end of the attachment member than the apical end of the second support surface.

Each support member of the dental prosthesis comprises an annular end surface having a width. Each annular end surface may be configured to be supported by the first support surface of one of the attachment members and be parallel with the first support surface.

The attachment member may comprise a threaded end portion at the apical end thereof. The attachment portion of the attachment member may comprise an external surface including a tool engaging portion, which is non-rotationally symmetrical, such as a hexagonal, and a rotationally symmetrical portion, which optionally, in some embodiments, includes a circumferential groove.

Each attachment member may comprises a face extending substantially parallel with the longitudinal axis of the attachment member and have a length extending between the outermost end of the first support surface and the apical end of the second support surface. The length of the face measured in the direction of the longitudinal axis of the attachment member is in the range of 0.65-0.95mm, preferably in the range of 0.75-1.30mm.

Further embodiments of the invention are defined in the dependent claims.

Some embodiments of the invention provide for increased flexibility, relaxed requirements on accuracy, aesthetically connection of a prosthesis to a soft-tissue level implant, etc.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a cross sectional view of an embodiment of an attachment member and a dental restoration; and
Fig. 2 is a side view of an embodiment of the attachment member.

### Description of Embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on embodiments of the present invention applicable to dental restorations. The dental restoration may, e.g., comprise a dental bridge, dental bridge framework to which porcelain may be added, or a bar for attachment of a denture. The dental restoration may be produced using CAD/CAM technology and solutions. Such solutions are generally available with the NobelProcera™ concept available via Nobel Biocare®.

Embodiments of the invention comprise a combination of a dental restoration 1 and a plurality of attachment members 2. In the following, a single attachment member 2 will be described. The dental restoration 2 is a multi-unit restoration, i.e. provided to restore multiple teeth and therefore designed for support by a plurality of dental fixtures (not shown), to which the restoration may be releasebly attached by means of fastening members, such as screws (also not shown).

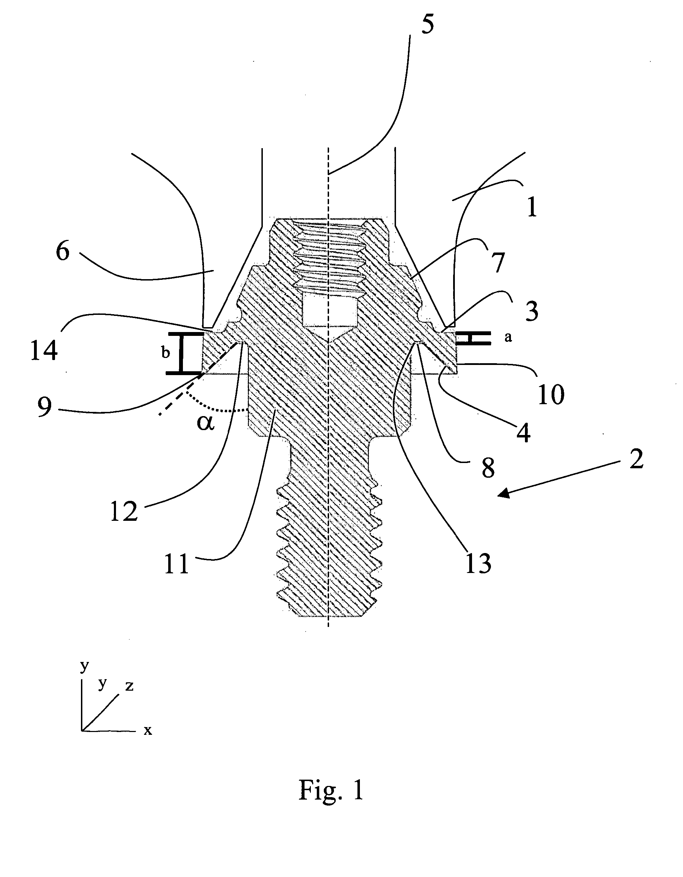

The attachment member 2 comprises a first support surface 3 for supporting the dental restoration 1. The first support surface 3 faces generally coronally of the attachment member 2. The attachment member also comprises a second support surface 4 for abutment against a support surface of the dental fixture. The second support surface 4 faces generally apically of the attachment member 2. The first support surface 1 has a larger angulation relative a longitudinal axis 5 of the attachment member 2 than the second attachment member measured from the apical towards the coronal end of the attachment member 2. The first support surface 3 may be generally perpendicular relative the longitudinal axis 5 of the attachment member 2. The second support surface 4 may have an angle α relative the longitudinal axis 5 of the attachment member 2, which may be in the range of 40-50 degrees, such as 45 degrees. Hence, with embodiments of the attachment member, the angulated support surface of the dental fixture, i.e. corresponding to the second support surface, is translated into a surface that is more angulated, and even substantially perpendicular relative the longitudinal axis 5 of the attachment member 2. Hence, any inaccuracies in the xy-plane of a support member 6 of the dental restoration 1 and the support surface of the dental fixture will cause less or even substantially no inaccuracies along the z-axis. This provides for a flexible solution of a dental restoration for restoring multiple teeth. The x, y, and z, directions and planes as referred to in this description are indicated in Fig. 1.

In the embodiment of Fig. 1, the attachment member 2 comprises the first support surface 3, which faces in the coronal direction of the attachment member 2. As mentioned above, the first support surface 3 is configured to support a corresponding support member 6 of the dental restoration 1. The second support surface 4 faces in the apical direction of the attachment member 2. In this embodiment, the second support surface 4 also faces towards the longitudinal axis 5 of the attachment member 2. The second support surface 4 is configured for engagement with a support surface of the dental fixture. The attachment member 2 comprises an attachment portion 7 at a coronal portion thereof. The attachment portion 7 is configured to receive the fastening member for releasably attaching the support member 6 of the dental restoration 1 to the attachment member 2. In this embodiment, the first support surface 3 is substantially perpendicular relative to the longitudinal axis 5 of the attachment member 2. The second support surface 4 is non-perpendicular relative to the longitudinal axis 5 of the attachment member 2.

In some embodiments, such as illustrated in Fig. 1, the axial distance a, measured in the direction of the longitudinal axis 5 of the attachment member 2, between the first support surface 3 and a coronal end 8 of the second support surface 4 is in the range of 0.05-0.35mm, preferably in the range of 0.15-0.25mm. This provides for a very compact construction.

In some embodiments, the axial distance, measured in the direction of the longitudinal axis 5 of the attachment member 2, between the first support surface 3 and an apical end or edge 9 of the second support surface 4 is in the range of 0.65-1.30mm, preferably in the range of 0.75-0.85mm. Hence, a face 10 formed by this surface is relatively short. This provides for an attachment member which can be used together with soft-tissue level implants, i.e. implants that have a support surface lying substantially flush or slightly below the soft-tissue surface when installed. Since the face 10 is relatively short, the aesthetics of the restoration is substantially not effected even if the face 10 extends slightly above the soft tissue level. In some embodiments, the coronal portion of the face is tapering inwardly towards its coronal end. For, example about half of the face may be substantially cylindrical, i.e. its apical portion, and about half may be tapering, i.e. its coronal portion. This allows for more compact structure having increased aesthetics.

In some embodiments, such as illustrated in Fig. and 2, the attachment member 3 comprises a substantially rotationally symmetrical portion 11 at an apical end thereof. The rotationally symmetrical portion 11 may be configured to be received in an internal cavity of the dental fixture. The coronal end of the second support surface 4 mates with, or terminates at, a coronal end of the rotationally symmetrical portion 11. In the embodiment illustrated, the second support surface 4 terminates at its coronal end with a rounded portion 12 converging towards the rotationally symmetrical portion 11. Hence, a recess or space is formed between the second support surface 4 and the substantially rotationally symmetrical portion 11, within which a portion of the dental fixture may be received. This may add to the structural strength of the assembly.

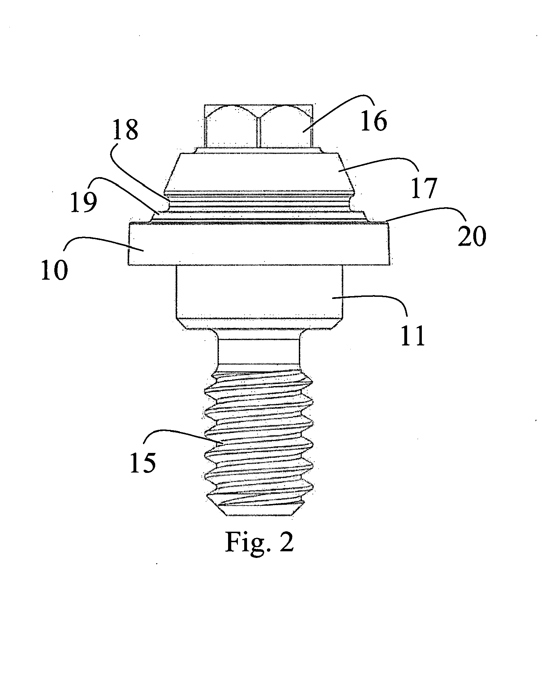

In the embodiments of Fig. 1 and 2, the coronal end 13 of the substantially rotationally symmetrical portion 11 has a diameter which is less than a diameter of the apical end 9 of the second support surface 4. The coronal end 13 of the substantially rotationally symmetrical portion 11 is located further towards the coronal end of the attachment member 2 than the apical end 9 of the second support surface 4. The diameter of the apical end 9 of the second support surface 4 may be in the range of 3-6mm depending on the diameter of the dental fixture.

In some embodiments, the support member 6 of the dental prosthesis comprises an annular end surface 14 having a width. The end surface may be substantially perpendicular to the longitudinal axis 5 of the attachment member 2 when assembled therewith. The annular end surface 14 may be configured to be supported by the first support surface 3 and be parallel therewith when correctly installed.

In the illustrated embodiments, the attachment member 3 comprises a threaded end portion 15 at the apical end thereof. The threaded end portion 15 may be formed integral with attachment member 3, i.e. it is formed as a uniform structure.

In some embodiments, the attachment portion 7 of the attachment member 3 comprises an external surface including a tool engaging portion 16, which is non-rotationally symmetrical, such as hexagonal. Furthermore, the attachment portion 7 may comprise a substantially rotationally symmetrical portion 17 located between the first support surface 3 and the coronal end of the attachment member 3, such as between the tool engaging portion 16 and the first support surface 3. The rotationally symmetrical portion 17 may be tapered, such as shaped as truncated cone having a base terminating at the inner circumference of the first support surface 3. The rotationally symmetrical portion optionally may include a circumferential groove 18, which may be continuous and located towards the apical end 19 thereof.

The face 10 may extend substantially parallel with the longitudinal axis of the attachment member 2 and may have a length extending between the outermost end or edge 20 of the first support surface 3 and the apical end 9 of the second support surface 4. The length of the face 10 measured in the direction of the longitudinal axis of the attachment member may be in the range of 0.65-0.95mm, preferably in the range of 0.75-1.30mm.

The present invention has been described above with reference to specific embodiments. However, other embodiments than the above described are equally possible within the scope of the invention. Different method steps than those described above may be provided within the scope of the invention. The different features and steps of the invention may be combined in other combinations than those described. The scope of the invention is only limited by the appended patent claims.

## Claims

1. In combination, a dental restoration, and a plurality of attachment members, wherein
- the dental restoration comprises a plurality of support members, each support member being configured to be releasably attached to an attachment member,
- each attachment member comprises a first support surface facing in the coronal direction of the attachment member for supporting a corresponding support member of the dental restoration, a second support surface facing in the apical direction of the attachment member and towards the longitudinal axis of the support member and being configured for engagement with a support surface of a dental fixture, and an attachment portion at an coronal portion thereof for receiving a fastening member for releasably attaching one of the support members, wherein the first support surface has an angle relative the longitudinal axis of the attachment member measured from its apical towards its coronal end that is larger than a corresponding angle of the second support surface.

2. The combination according to claim 1, wherein the first support surface is substantially perpendicular relative to the longitudinal axis of the attachment member, and the second support surface is non-perpendicular relative to the longitudinal axis of the attachment member.

3. The combination according to claim 1, wherein the axial distance, measured in the direction of the longitudinal axis of the attachment member, between the first support surface and a coronal end of the second support surface is in the range of 0.05-0.35mm, preferably in the range of 0.15-0.25mm.

4. The combination according to claim 1 or 2, wherein the axial distance, measured in the direction of the longitudinal axis of the attachment member, between the first support surface and an apical end of the second support surface is in the range of 0.65-0.95mm, preferably in the range of 0.75-1.30mm.

5. The combination according to any of the previous claims, wherein the attachment member comprises a substantially rotationally symmetrical portion at an apical end thereof, which is configured to be received in an internal cavity of the dental fixture.

6. The combination according to claim 4, wherein an apical end of the substantially rotationally symmetrical portion has a diameter which is less than a diameter of a apical end of the second support surface, and the coronal end of the substantially rotationally symmetrical portion is located further towards the coronal end of the attachment member than the apical end of the second support surface.

7. The combination according to any of the previous claims, wherein each support member of the dental prosthesis comprises an annular end surface having a width, wherein each annular end surface is configured to be supported by the first support surface of one of the attachment members and be parallel with the first support surface.

8. The combination according to any of the previous claims, wherein the attachment member comprises a threaded end portion at the apical end thereof, and the attachment portion of the attachment member comprises an external surface including a tool engaging portion, which is non-rotationally symmetrical, such as a hexagonal, and a rotationally symmetrical portion, which optionally includes a circumferential groove.

9. The combination according to any of the previous claims, wherein each attachment member comprises a face extending substantially parallel with the longitudinal axis of the attachment member and having a length extending between the outermost end of the first support surface and the apical end of the second support surface, wherein the length of the face measured in the direction of the longitudinal axis of the attachment member is in the range of 0.65-0.95mm, preferably in the range of 0.75-1.30mm.
